## Europäisches Patentamt

## European Patent Office

## Office européen des brevets

(11) Veröffentlichungsnummer: **0 218 577**

**B1**

(12) # EUROPÄISCHE PATENTSCHRIFT

(45) Veröffentlichungstag der Patentschrift:
**31.08.88**

(51) Int. Cl.⁴: **B 64 F 1/34,** F 02 B 63/00

(21) Anmeldenummer: **85901423.5**

(22) Anmeldetag: **11.03.85**

(86) Internationale Anmeldenummer:
**PCT/EP 85/00095**

(87) Internationale Veröffentlichungsnummer:
**WO 85/04149 (26.09.85 Gazette 85/21)**

(54) VERSORGUNGSANLAGE FÜR DIE LUFT- UND RAUMFAHRT.

(30) Priorität: **14.03.84 DE 3409378**

(43) Veröffentlichungstag der Anmeldung:
**22.04.87 Patentblatt 87/17**

(45) Bekanntmachung des Hinweises auf die Patenterteilung:
**31.08.88 Patentblatt 88/35**

(84) Benannte Vertragsstaaten:
**AT BE CH DE FR GB LI LU NL SE**

(56) Entgegenhaltungen:
**WO-A-84/00939**
**US-A-4 101 100**

(73) Patentinhaber: **JUNG, Bernd, Dieselstrasse 22,
D-6352 Ober- Mörlen (DE)**

(72) Erfinder: **JUNG, Bernd, Dieselstrasse 22, D-6352
Ober- Mörlen (DE)**

(74) Vertreter: **Stoffregen, Hans- Herbert, Dr. Dipl.-
Phys., Patentanwälte Strasse & Stoffregen
Salzstrasse 11a, D-6450 Hanau (DE)**
Vertreter: **( )**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Versorgungsanlage für die Luft- und Raumfahrt zur Verfügungstellung von Druckluft, wobei die Druckluft mittels zumindest eines von einem Antrieb betätigten Verdichters erzeugbar ist.

In der FR-A-1 473 215 wird eine mobile Anlage zur Erzeugung von elektrischer Energie und Druckluft beschrieben. Über Keilriemen ist der Motor mit dem Verdichter und dem Generator verbunden. Die Drehzahl des Generators kann dabei nicht unabhängig von der des Verdichters eingestellt werden. Bei dem Verdichter selbst handelt es sich um einen Kolbenverdichter, dessen Druckluft weder öl- noch pulsationsfrei ist. Durch die Verwendung eines Kolbenverdichters ist nicht die Möglichkeit gegeben, die erforderlichen Mengen an Startluft für ein Luftfahrzeug zu erzeugen. Daher ist die entsprechende mobile Anlage auch nur als übliche Arbeitsmaschine ausgebildet, um zum Beispiel bei Straßenarbeiten Verwendung zu finden.

Eine Anlage der eingangs genannten Art ist der US-A-4 101 100 zu entnehmen. Dabei ist die die Druckluft bzw. die elektrische Energie erzeugende Anlage stationär ausgebildet, um über Versorgungsleitungen mobilen Einheiten Druckluft und elektrische Energie zuzuführen, die dann zur Versorgung eines Flugzeuges abgegeben wird. Die Druckluft wird dabei mittels eines Schraubenkompressors erzeugt. Dieser muß recht voluminös ausgebildet sein, um den erforderlichen Massendurchsatz bei benötigtem Druck zur Verfügung zu stellen. Die elektrische Energie selbst wird dem elektrischen Versorgungsnetz entnommen, die dann in die erforderliche Spannung transformiert bzw. in die erforderliche Frequenz umgesetzt wird. Entsprechende Anlagen sind konstruktiv aufwendig und damit wartungsintensiv. Daher ist ein Einsatz zum Beispiel auf kleineren von Düsenmaschinen angeflogenen Flughäfen oder auf Flugplätzen der Dritten Welt nicht oder nur schwer einsetzbar. Aus diesem Grund ist es erforderlich, daß die Düsenflugzeuge entweder installierte Versorgungsanlagen selbst aufweisen oder aber mobile Geräte mitführen, was sich allein aus Kostengründen nachteilig auswirkt. Aber es ist noch auf einen weiteren Nachteil hinzuweisen. Ist nämlich ein entsprechendes an Bord befindliches Anlaßgerät defekt, so muß ein Ersatzgerät eingeflogen werden, da sonst die Maschine fest sitzt. In der nicht vorveröffentlichten PCT-Anmeldung WO 84/00 939 desselben Anmelders ist eine Versorgungsanlage für die Luft- und Raumfahrt beschrieben, mit der bei kompakter Bauweise mit einem Dieselmotor Druckluft und/oder elektrische Energie erzeugt werden kann.

Um Flugzeuge zu klimatisieren, ist es bekannt, fest in dem Flugzeug installierte Klimaanlagen mit zum Beispiel von einer Turbine stammenden Druckluft einer stationären Versorgungsanlage zu versorgen. Hierzu ist es erforderlich, daß das Flugzeug von autorisiertem Personal in Betrieb genommen wird.

Aufgabe der vorliegenden Erfindung ist es u. a., eine Versorgungsanlage der zuvor beschriebenen Art so auszubilden, daß die Möglichkeit besteht, an einem gewünschten Ort unabhängig von einem stationären Antrieb Kalt- oder Warmluft für ein Flugzeug zur Verfügung zu stellen, ohne daß dieses in Betrieb genommen werden muß.

Die Aufgabe wird erfindungsgemäß dadurch gelöst, daß die Versorgungsanlage mobil ist und als Antrieb einen Diesel- oder Elektromotor, über den der als Radial- oder Axialverdichter ausgebildete Verdichter antreibbar ist, sowie eine Klimaanlage (Aircyclemaschine) umfaßt, wobei der Verdichter die Klimaanlage (Aircyclemaschine) mit Druckluft versorgt. Erfindungsgemäß wird demzufolge eine Aircyclemaschine am Boden und als Bestandteil der erfindungsgemäßen Versorgungsanlage bzw. des die erforderliche Druckluft liefernden Verdichters benutzt, wobei der Verdichter ein Radial- und/oder Axialverdichter ist, der von einem Diesel- oder Elektromotor angetrieben wird. Durch die erfindungsgemäße Lehre ist erstmalig die Möglichkeit geschaffen, mit einer mobilen Anlage ein Flugzeug unabhängig von dessen Betrieb mit Kühl- oder Warmluft zu versorgen, wobei gegebenenfalls gleichzeitig oder wahlweise Startluft und elektrische Energie zur Verfügung gestellt werden kann. Der Motor sollte ein Dieselmotor sein, um zusammen mit dem Verdichter eine besonders kompakte, gegebenenfalls mit einem Flugzeug problemlos zu transportierende Anlage zur Verfügung zu stellen. Jedoch kann gegebenenfalls auch ein Elektromotor als Antrieb benutzt werden.

Sofern der Motor einen Generator und gleichzeitig einen Verdichter antreibt, kann dessen Drehzahl unabhängig von der Drehzahl des Generators, der gegebenenfalls durch einen oder mehrere Verdichter ersetzt werden kann, verändert werden.

Auch bietet sich die Möglichkeit, daß von der Antriebswelle des Antriebs wie Dieselmotor neben dem Verdichter, der die Klimaanlage (Aircyclemaschine) betreibt, ein weiterer Kompressor oder weitere Generatoren betätigt werden. Bei Flugzeugen bis zur Größenordnung B-707, DC-8, DC-10 je nach Triebwerk, genügt normalerweise ein Kompressor. Bei Großraumflugzeugen zum Beispiel vom Typ 747 kann jedoch ein zweiter Kompressor betätigt werden, der ansonsten durch einen Generator ersetzbar ist.

Auch aus dieser Ausgestaltung zeigt sich die flexible Anpassung der erfindungsgemäßen Versorgungsanlage an die Gegebenheiten, woraus wirtschaftliche und kostengünstige Vorteile ersichtlich werden.

Nach einer weiteren erfindungsgemäßen Ausgestaltung ist der Antrieb ein luftgekühlter Dieselmotor, dessen Kühlluft zum Betreiben der Vor- und/oder Zwischenkühler einer bekannten Klimaanlage von Flugzeugen benutzt wird. Auch hierdurch ergibt sich eine kompakte, überaus funktionstüchtige Konstruktion.

Nach einem besonders hervorzuhebenden Vorschlag zeichnet sich die Erfindung dadurch aus, daß der Antrieb als einen Frequenzumformer umfassender Elektromotor oder umfassende Kraftmaschine ausgebildet ist, dem bzw. der wahlweise der Verdichter zuschaltbar ist.

Durch die zuvor wiedergegebenen Merkmale wird erfindungsgemäß zum Beispiel ein rotierender 400 Hz Frequenzumformer unmittelbar zur Erzeugung der elektrischen Energie benutzt, ohne daß ein weiterer Generator zwingend vorhanden sein muß. Der Frequenzumformer selbst treibt außerdem den Verdichter an, um im erforderlichen Umfang Druckluft zu erhalten, die selbst zur Versorgung einer Klimaanlage benutzt werden kann.

Weitere Einzelheiten, Vorteile und Merkmale der Erfindung ergeben sich nicht nur aus den Ansprüchen, sondern auch aus den in der Zeichnung dargestellten bevorzugten Ausführungsbeispielen.

Es zeigen:
Fig. 1 eine erste Ausführungsform einer Versorgungsanlage,
Fig. 2 eine zweite Ausführungsform einer Versorgungsanlage,
Fig. 3 eine dritte Ausführungsform einer Versorgungsanlage,
Fig. 4 eine vierte Ausführungsform einer Versorgungsanlage,
Fig. 5 eine weitere Ausführungsform einer Versorungsanlge,
Fig. 6 und 7 die Ausführungsformen nach Fig. 1 und Fig. 5 in Kombination mit einer Aircyclemaschine und
Fig. 8 eine weitere Ausführungsform in Verbindung mit einer Aircyclemaschine.

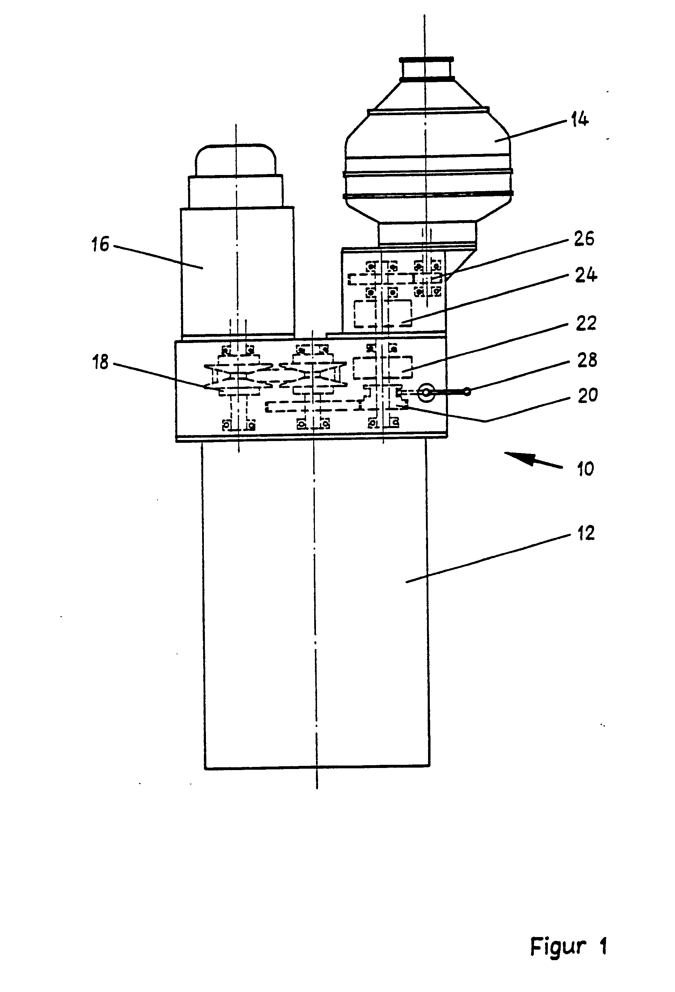

In Fig. 1 ist in schematischer Darstellung eine Versorgungsanlage 10 dargestellt, die im wesentlichen einen Antrieb wie vorzugsweise Dieselmotor 12, einen Verdichter 14 sowie einen Generator 16 umfaßt. Die Abtriebswelle des Dieselmotors 12 betätigt zum einen ein stufenloses Getriebe in Form eines mechanischen Wandlers 18 nach dem PIV-Prinzip und zum anderen ein Schaltgetriebe 20, das über einen Freilauf 22 mit einer Lastschaltkupplung 24 verbunden ist, die ihrerseits über ein Zahnradgetriebe 26 den Kompressor 14 betätigt. Dabei kann das Schaltgetriebe durch ein anderes geeignetes Getriebe ausgetauscht werden. Ferner kann die Lastschaltkupplung 24 und das Schaltgetriebe 20 oder ein entsprechendes Getriebe untereinander ausgetauscht werden.

Der mechanische Wandler 18, dessen Abtriebswelle den Generator 16 betätigt, ist nun so ausgebildet, daß über eine Regeleinheit, zum Beispiel durch hydraulische Anpressung der Scheiben, sichergestellt ist, daß auch bei wechselnder Drehzahl des Dieselmotors 12 die Frequenz des Generators 16 konstant gehalten wird. Selbstverständlich kann auch der mechanische Wandler 18 durch einen hydrostatischen oder hydrodynamischen Wandler ersetzt werden.

Mittels des Schaltgetriebes 20 kann zum Beispiel bei Stillstand des Motors über einen Hebel 28 wahlweise der Kompressor 14 zugeschaltet werden und mittels Kupplung 24 im Stillstand und Betrieb, nämlich dann, wenn pulsations- und ölfreie Druckluft benötigt wird. In diesem Fall erst muß die Drehzahl des Motors 12 erhöht werden. Die Erhöhung der Motordrehzahl bewirkt jedoch nicht, daß sich die Frequenz des Generators 16 ändert, da in diesem Fall das Übersetzungsverhältnis des Getriebes 18 entsprechend verkleinert wird. Dies erfolgt so lange, bis der Kompressor 14 seine Nenndrehzahl erreicht hat. Die Ausregelung bzw. das Konstanthalten der Generatorfrequenz wird mittels des Motordrehzahlreglers erzielt, welcher vorzugsweise elektronisch/elektromechanisch ausgelegt ist und auch auf Drehzahländerungen des Generators reagiert.

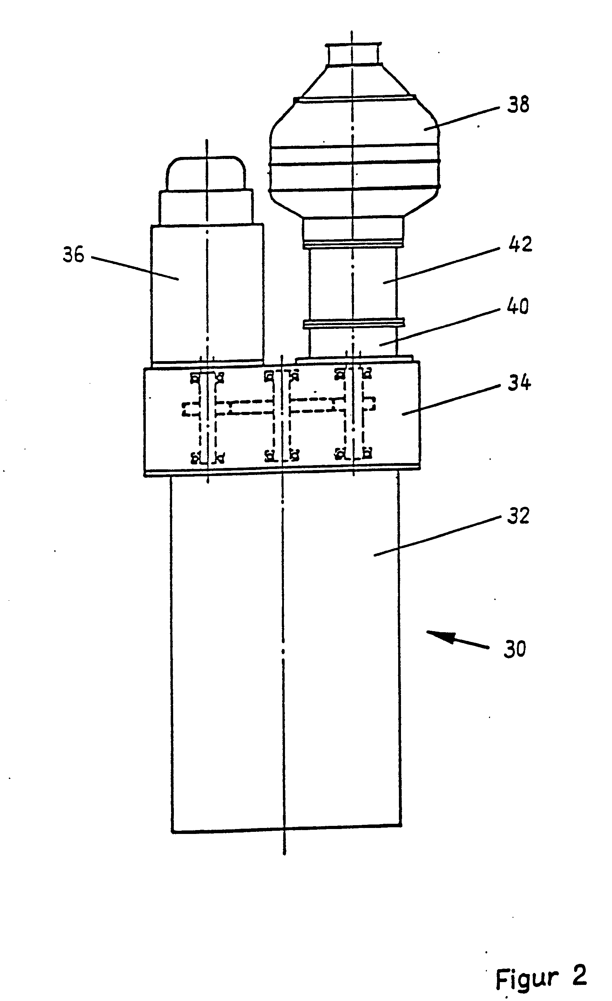

In Fig. 2 ist eine alternative Ausführungsform einer Versorgungsanlage 30 dargestellt, die gleichfalls einen Dieselmotor 32 umfaßt, dem ein Verteilergetriebe 34 vorzugsweise in Form eines Zahnradgetriebes nachgeschaltet ist, deren Abtriebswellen einen Generator 36 und einen Kompressor 38 antreiben. Dabei ist der Kompressor 38 gleichfalls ein Radial- und/oder Axialverdichter wie der Kompressor 14 nach Fig. 1. Dem Zahnradgetriebe ist in der Ausführungsform nach Fig. 2 eine Flüssigkeitskupplung 40 nachgeschaltet, um über ein Planetengetriebe den Kraftfluß von der Abtriebswelle des Zahnradgetriebes 34 auf den Verdichter 38 zu ermöglichen. Auch in dieser Ausführungsform kann zum Beispiel mittels der Flüssigkeitskupplung, die nach dem Föttinger-Prinzip arbeitet, die Drehzahl des Kompressors 38 unabhängig von der Drehzahl des Generators 36 gesteuert werden. Alternativ dazu kann dem Verteilergetriebe 34 ein stufenloses Getriebe nachgeschaltet werden, dessen Abtriebswelle mit dem Generator 36 verbunden ist, um so gleichfalls die Drehzahl des Generators unabhängig von der Drehzahl des Kompressors 38 einzustellen. Auch sei darauf hingewiesen, daß mittels der Flüssigkeitskupplung 40 der Kompressor 38 wahlweise zu- bzw. abgeschaltet werden kann.

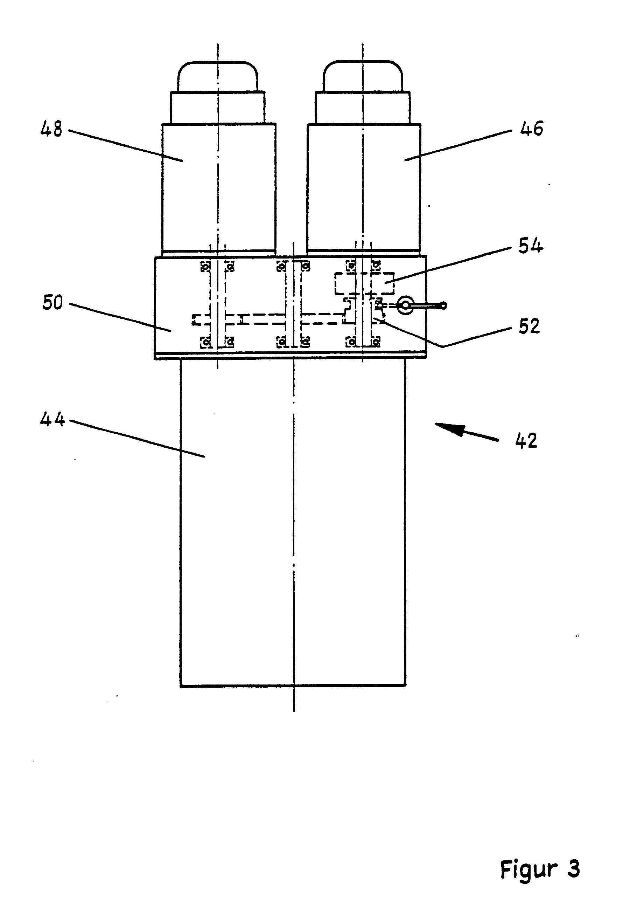

In Fig. 3 ist eine weitere Ausführungsform einer Versorgungsanlage 42 dargestellt, die ein Dieselmotor 44 und zwei von diesem betriebene Generatoren 46, 48 umfaßt. Dabei ist an den Dieselmotor 44 ein Verteilergetriebe 50 angeflanscht, dessen Abtriebswellen die Generatoren 46 und 48 antreiben. Der Kraftfluß zum Generator 46 erfolgt vorzugsweise über ein Schaltgetriebe 52 und dieser nachgeordneten Lastschaltkupplung 54, um so wahlweise einen der Generatoren - hier den Generator 46 - zu- bzw. abschalten zu können.

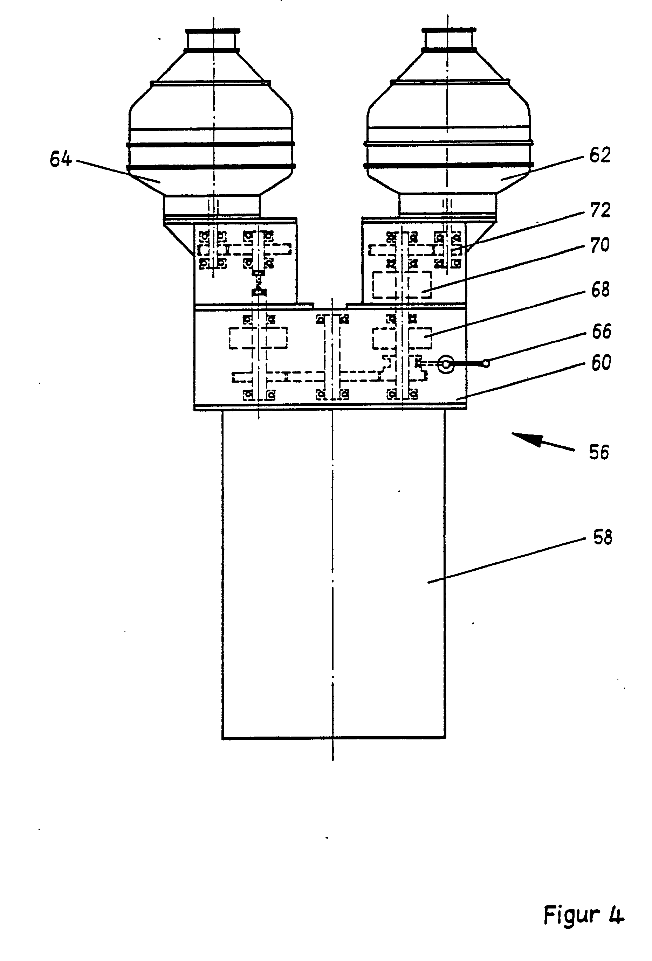

Schließlich ist in Fig. 4 eine vierte Ausführungsform einer Versorgungsanlage 56 wiedergegeben, die einen Dieselmotor 58, ein an dieses angeflanschtes Verteilergetriebe 60 sowie von dessen Abtriebswellen betätigte Kompressoren 62 und 64 umfaßt. Dabei ist zwischen dem Verteilergetriebe 60 und dem Kompressor 62 ein Schaltgetriebe 66 mit nachgeordnetem Freilauf 78 und sich anschließender Lastschaltkupplung 70 sowie Zahnradgetriebe 72 angeordnet. Die Lastschaltkupplung und das Schaltgetriebe können wahlweise ausgetauscht werden. Mittels des Schaltgetriebes 66 ergibt sich gleichfalls der Vorteil, daß der Kompressor 62 wahlweise zu- und abgeschaltet werden kann.

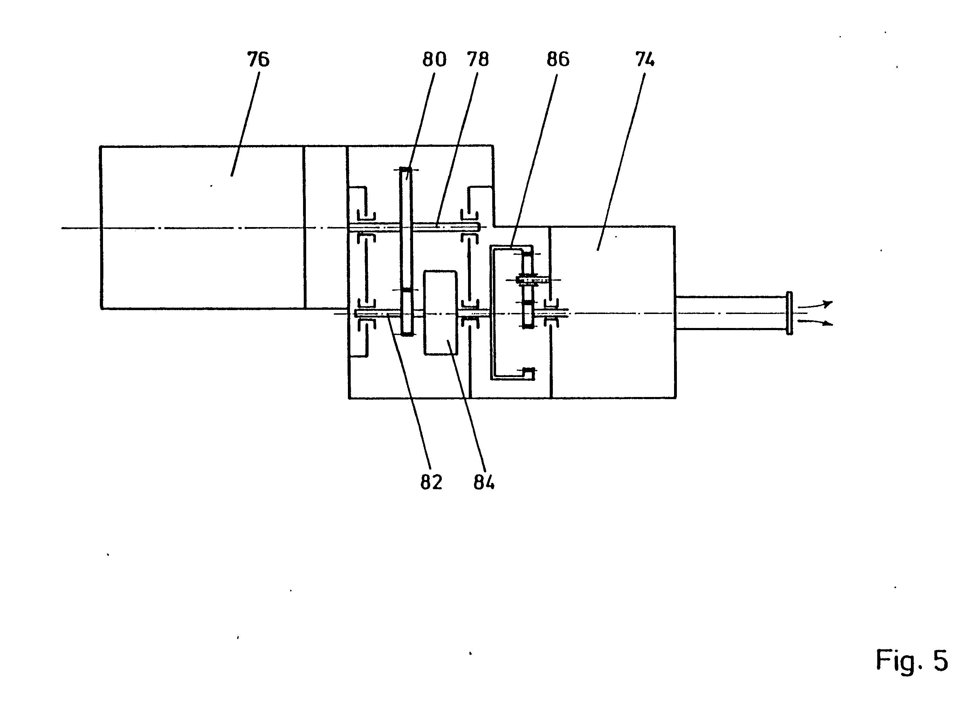

Ferner sei darauf hingewiesen, daß das den Dieselmotoren der Ausführungsbeispiele nachgeordnete Verteilergetriebe allein eine Änderung der Drehzahl in den Generatoren bzw. Kompressoren hervorrufen kann, indem die Zahnräder bezüglich ihrer Übersetzungen verändert werden. Ist in den Fig. 1 bis 4 eine Versorgungsanlage beschrieben, bei der der Antrieb in Form von vorzugsweise einem Dieselmotor über zum Beispiel ein Verteilergetriebe einen Generator und einen Verdichter bzw. Kombinationen davon gleichzeitig oder getrennt antreibt, wobei bei der Kombination Generator-Verdichter die Drehzahl des Generators unabhängig von der des Verdichters einstellbar ist, so ist selbstverständlich auch die Möglichkeit gegeben, daß von dem Antrieb von vorzugsweise einem Dieselmotor nur ein Aggregat wie ein Verdichter 74 betätigt wird (Fig. 5). Dabei ist der Antrieb - wie zuvor darauf hingewiesen - als Dieselmotor 76 ausgebildet. Von der Abtriebswelle 78 des Dieselmotors wird vorzugsweise über ein Verteilergetriebe 80 eine zu dem Verdichter 74 führende Abtriebswelle 82 angetrieben, der eine Lastschaltkupplung und/oder ein Freilauf 84 nachgeschaltet ist, von der bzw. dem aus ein Zahnradgetriebe 86 wie zum Beispiel ein Planeten- oder Stirnradgetriebe betätigt wird, über das der Kompressor 74 letztendlich angetrieben wird, um Startluft für Düsenmaschinen oder ähnliches zur Verfügung zu stellen. Dabei kann selbstverständlich die Lastschaltkupplung bzw. der Freilauf 84 auch vor dem Verteilergetriebe 80 oder hinter dem Zahnradgetriebe 86 geschaltet sein, ohne daß dadurch die Funktionstüchtigkeit der erfindungsgemäßen Versorgungsanlage in irgend einer Weise beeinträchtigt wird.

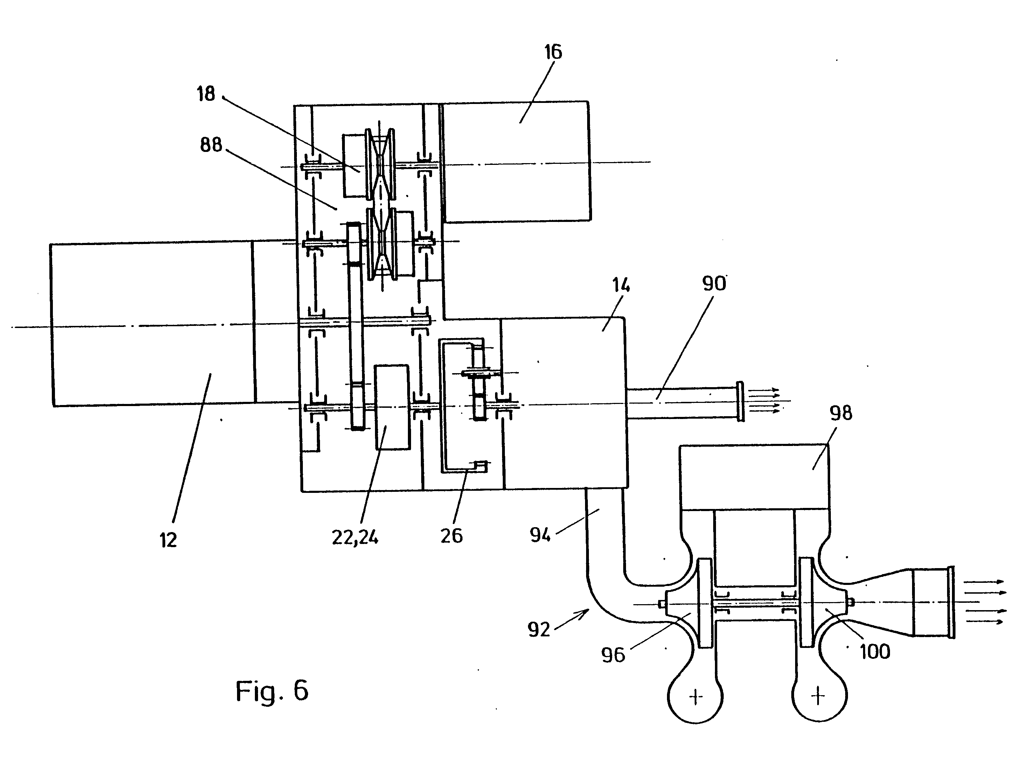

In Fig. 6 ist nun eine besonders hervorzuhebende Weiterbildung des Ausführungsbeispiels nach Fig. 1 beschrieben, so daß gleiche Elemente mit gleichen Bezugszeichen versehen sind. So wird über ein Verteilergetriebe 88, das von dem luftgekühlten Dieselmotor 12 angetrieben wird, sowohl der Generator 16 als auch der Verdichter 14 angetrieben, wobei letzterer wahlweise zugeschaltet werden kann. Mittels des mechanischen Wandlers 18 (zum Beispiel PIV-Prinzip) ist - wie zuvor ausführlich beschrieben - sichergestellt, daß die Drehzahl des Generators 16 unabhängig von der des Verdichters 14 einstellbar ist. Die von dem Verdichter 14, der als Radial- und/oder Axialverdichter ausgebildet ist, entnommene Luft kann nun als Startluft einem Flugzeug über einen Anschluß 90 zugeführt werden oder zumindest teilweise einer Klimaanlage (Aircyclemaschine) 92, die schematisch wiedergegeben ist und integraler Bestandteil der Gesamtanlage ist. Über ein nicht dargestelltes zum Beispiel pneumatisch betätigbares Ventil gelangt über eine Leitung 94 zumindest ein Teil der dem Verdichter 14 zu entnehmenden Druckluft zu der Aircyclemaschine 92, die in gewohnter Weise einen Kompressor 96, einen Wärmetauscher 98 sowie eine Turbine 100 umfaßt, von der aus die entspannte und damit abgekühlte Luft dem Innenraum eines Flugzeuges zugeführt wird. Normalerweise befindet sich außerdem vor dem Kompressor 96 ein weiterer Wärmetauscher.

Durch den der Fig. 6 zu entnehmenden erfindungsgemäßen Ausgestaltung ist demzufolge erstmalig die Möglichkeit gegeben, mit einer kompakten für die Flugzeugindustrie bzw. Raumfahrt bestimmten Versorgungsanlage wahlweise Startluft zu erzeugen oder eine Klimaanlage zur Verfügung zu stellen, wobei gegebenenfalls gleichzeitig elektrische Energie erzeugt wird. Dies ist nach den bekannten Anlagen nicht möglich, da die für Aircyclemaschinen bestimmten Versorgungsanlagen hinsichtlich ihres Massendurchsatzes ausschließlich auf die Bedürfnisse der Klimatisierung abgestellt sind, so daß die Druckluft zur Verwendung als Startluft nicht ausreicht. Dabei kann zusätzlich die Kühlluft des Dieselmotors zum Betreiben des nicht näher bezeichneten Vor- und Zwischenkühlers der Aircyclemaschine benutzt werden.

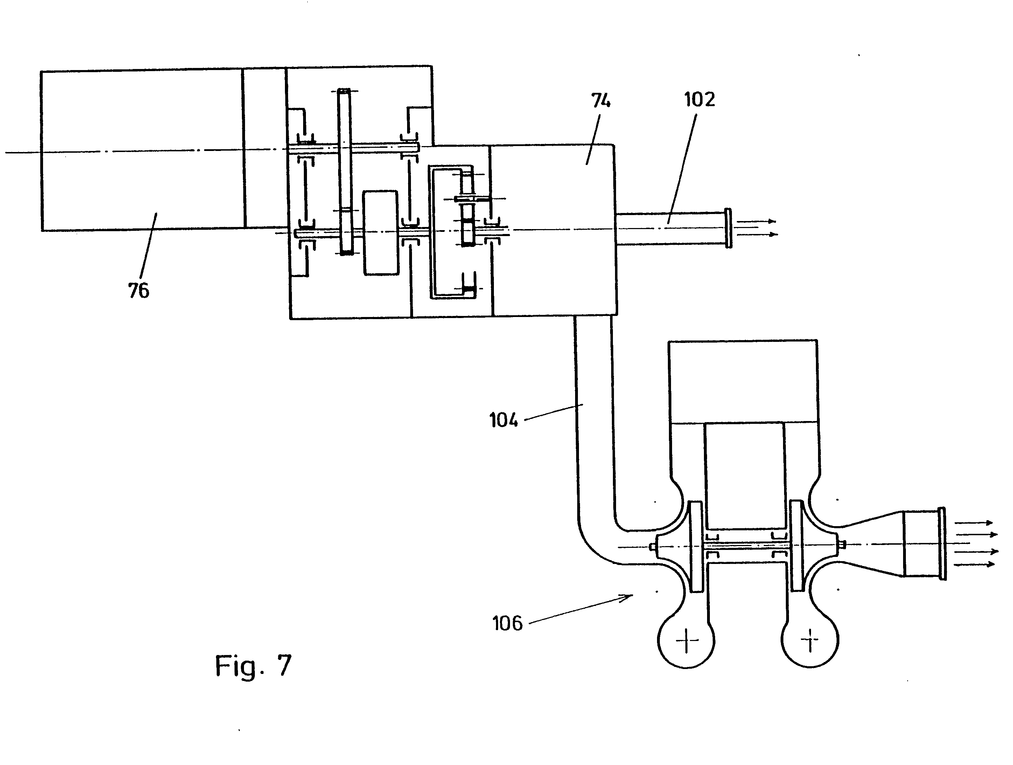

In Fig. 7 ist eine Ausgestaltung des Ausführungsbeispiels nach Fig. 5 beschrieben. Demzufolge wird von einem Antrieb wie zum Beispiel einem Dieselmotor 76 ein einziger Verdichter 74 betätigt, dessen Druckluft wahlweise als Startluft über den Anschluß 102 oder zum Klimatisieren eines Flugzeuginneren benutzt werden kann. Zu diesem Zweck geht von dem Verdichter 74 über eine Leitung 104 eine Aircyclemaschine 106 bekannten Aufbaus aus. Eine entsprechende Anlage zeichnet sich ebenfalls durch ihre kompakte Bauweise aus, wobei alternativ eine Verwendung ausschließlich für Startluft möglich ist.

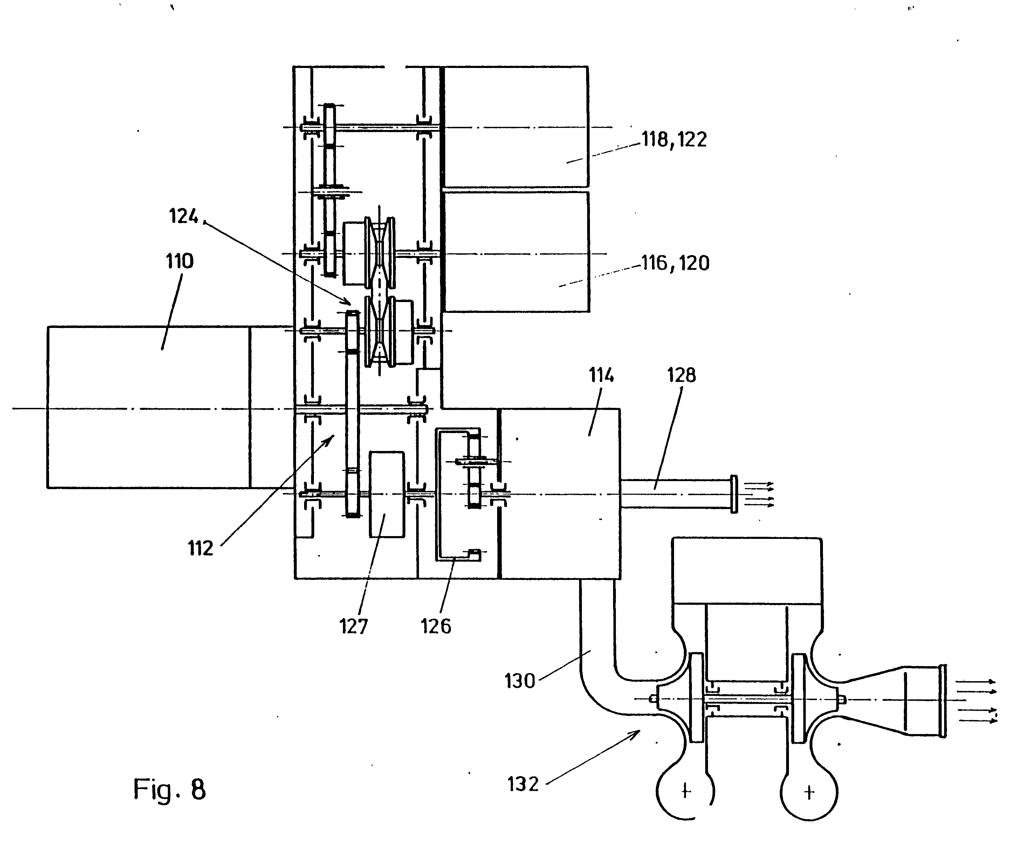

Schließlich ist in Fig. 8 eine weitere Ausgestaltung der erfindungsgemäßen Lehre dargestellt, die sich insbesondere dadurch auszeichnet, daß von einem Antrieb wie Dieselmotor 110 neben einem Verdichter 114 zusätzlich zwei weitere Generatoren 116, 118 oder Kompressoren 120, 122 oder Kombinationen dieser angetrieben werden können. Die hierzu erforderlichen mechanischen Verbindungselemente sind dem Prinzip nach in den zuvor diskutierten Ausführungsbeispielen erläutert worden, so daß insoweit ein näheres Eingehen nicht erforderlich ist. So erkennt man unmittelbar, daß von einem Verteilergetriege 112 ein stufenloses Getriebe- in Form eines mechanischen Wandlers 114 in Form eines PIV-Getriebes oder hydrodynamischen oder hydrostatischen Wandlers betätigt wird, der seinerseits die Generatoren bzw. Kompressoren oder Kombinationen dieser antreibt. Selbstverständlich kann der Antrieb dieser Aggregate auch direkt oder gegebenenfalls über eine Stellkupplung von dem Verteilergetriebe 112 erfolgen. Außerdem wird über die Abtriebswelle des Dieselmotors 110 bzw. das Verteilergetriebe 112 ein Zahnradgetriebe wie Planeten- oder Stirnradgetriebe 126 betätigt, dem eine Lastschaltkupplung und/oder ein Freilauf 127 vor- oder nachgeschaltet sein kann, um so den Betrieb des Verdichters 114 im gewünschten Umfang erfolgen zu lassen. Von dem Verdichter 114 gehen zum einen ein Anschluß 128 zur Abgabe von Startluft und zum anderen eine Leitung 130 aus, die in eine Aircyclemaschine 132 mündet. Auch das Ausführungsbeispiel nach Fig. 8 ermöglicht demzufolge mit einer einzigen kompakten Versorgungsanlage alternativ oder gemeinsam die Erzeugung von elektrischer Energie, Druckluft als Startluft bzw. Versorgungsluft für Flugzeuge bestimmte Klimaanlagen.

Mit den erfindungsgemäßen Vorschlägen wird erstmals eine mobile Druckluft- und/oder Bordstromversorgungsanlage für die Luft- und Raumfahrt zur Verfügung gestellt, die gleichzeitig Klimaanlagen versorgen kann. Ferner ist eine entsprechende Anlage kompakt und mobil ausgebildet und weist dabei im Vergleich zu den herkömmlichen Geräten ein erheblich kleineres Gewicht auf. So kann bei einer erfindungsgemäßen Anlage für eine Leistung von 90 KVA und einen Druckluftdurchsatz von 50 m$^3$ pro Minute bei 3 bar ein Gewicht von ca. 1,5 Tonnen ausreichen, wohingegen bei herkömmlichen mit einem Dieselmotor betätigten Startgeräten ein Gewicht von 5 Tonnen vorliegt, mit denen jedoch nur Druckluft erzeugt werden kann, die jedoch nicht zur Versorgung von Aircyclemaschinen bestimmt ist. Ein entsprechendes Gewicht haben Bordstromversorgungsanlagen.

## Patentansprüche

1. Versorgungsanlage für die Luft- und Raumfahrt zur Verfügungstellung von Druckluft, wobei die Druckluft mittels zumindest eines von einem Antrieb betätigten Verdichters erzeugbar ist,
dadurch gekennzeichnet,
daß die Versorgungsanlage (10, 30, 42, 56) mobil ist und als Antrieb einen Diesel- oder Elektromotor (12, 32, 44, 58, 76, 110), über den der als Radial- oder Axialverdichter (14, 38, 62, 64, 74, 120, 122) ausgebildete Verdichter antreibbar ist, sowie eine Klimaanlage (Aircyclemaschine) (22, 106, 132) umfaßt, wobei der Verdichter die Klimaanlage (Aircyclemaschine) (92, 106, 132) mit Druckluft versorgt.

2. Versorgungsanlage nach Anspruch 1,
dadurch gekennzeichnet,
daß neben dem Verdichter (14, 38, 62, 64, 74, 120, 122) ein Generator (16, 36, 46, 48, 116, 118) betätigbar ist, wobei die Drehzahl des Verdichters unabhängig von der des Generators einstellbar ist.

3. Versorgungsanlage nach Anspruch 1,
dadurch gekennzeichnet,
daß der Antrieb ein luftgekühlter Dieselmotor (12, 32, 44, 58, 76, 110) ist, dessen Kühlluft dem für die Klimaanlage (Aircyclemaschine) (92, 106, 132) zugeordneten Vor- und/oder Zwischenkühler zuführbar ist.

4. Versorgungsanlage nach Anspruch 1,
dadurch gekennzeichnet,
daß der Antrieb als einen Frequenzumformer umfassender Elektromotor oder umfassende Kraftmaschine ausgebildet ist, dem bzw. der wahlweise der Verdichter zuschaltbar ist.

5. Versorgungsanlage nach Anspruch 1,
dadurch gekennzeichnet,
daß der die Klimaanlage (Aircyclemaschine) mit Druckluft versorgende Verdichter über eine Lastschaltkupplung antreibbar ist.

## Claims

1. A supply unit for air and space navigation to provide compressed air, the compressed air being generatable by means of at least one compressor operated by a drive unit,
characterized in that
the supply unit (10, 30, 42, 56) is mobile and comprises as a drive unit a diesel engine or electric motor (12, 32, 44, 58, 76, 110) by which the compressor of radial or axial type (14, 38, 62, 64, 74, 120, 122) is drivable, and an air cycle machine (22, 106, 132), the compressor supplying the air cycle machine (22, 106, 132) with compressed air.

2. A supply unit according to Claim 1,
characterized in that
a generator (16, 36, 46, 48, 116, 118) is actuatable in addition to the compressor (14, 38, 62, 64, 74, 120, 122), the speed of the compressor being adjustable independently of that of the generator.

3. A supply unit according to Claim 1,
characterized in that
the drive unit is an air-cooled diesel engine (12, 32, 44, 58, 76, 110) whose coolant air can be passed to the precooler and/or intermediate cooler associated with the air cycle machine (92, 106, 132).

4. A supply unit according to Claim 1,

characterized in that
the drive unit is designed as an electric motor comprising a frequency converter, or as an engine comprising a frequency converter, the compressor being connectable to said motor or engine.

5. A supply unit according to Claim 1, characterized in that
the compressor supplying the air cycle machine with compressed air is drivable by a change-under-load clutch.


**Revendications**

1. Installation de ravitaillement pour la navigation aérienne et spatiale, destinée à la fourniture d'air comprimé, l'air comprimé pouvant être produit à l'aide d'au moins un compresseur actionné par un entraînement,
caractérisée en ce que
l'installation de ravitaillement ( 10, 30, 42, 56) est mobile et que celle-ci comprend, comme entraînement, un moteur diesel ou électrique (12, 32, 44, 58, 76, 110), par l'intermédiaire duquel le compresseur, conçu comme compresseur radial ou axial (14, 38, 62, 64, 74, 120, 122) peut être entraîné, ainsi qu'une installation de climatisation (machine à cycle d'air) (22, 106, 132), le compresseur alimentant l'installation de climatisation (machine à cycle d'air) (92, 106, 132) en air comprimé.

2. Installation de ravitaillement selon la revendication n° 1
caractérisée en ce que
outre le compresseur (14, 38, 62, 64, 74, 120, 122), un générateur (16, 36, 46, 116, 118) est actionnable, la vitesse de rotation du compresseur étant réglable indépendamment de celle du générateur.

3. Installation de ravitaillement selon revendication n° 1 ,
caractérisée en ce que
l'entraînement est un moteur diesel refroidi par air (12, 32, 44, 58, 76, 110), moteur dont l'air réfrigérant est acheminable au système réfrigérant antérieur et/ou intermédiaire adjoint à l'installation de climatisation ( machine à cycle d'air) ( 92, 106, 132).

4. Installation de ravitaillement selon revendication n° 1,
caractérisée en ce que
l'entraînement est conçu comme un moteur électrique ou machine motrice comprenant un convertisseur de fréquences, auquel ou à laquelle le compresseur peut être raccordé à volonté.

5. Installation de ravitaillement selon revendication n° 1,
caractérisée en ce que le compresseur alimentant l'installation de climatisation (machine à cycle d'air) en air comprimé est actionnable par l'intermédiaire d'un embrayage sous charge.

Figur 1

38

42

36

40

34

32

30

Figur 2

Figur 3

64

62

72

70

68

66

60

56

58

**Figur 4**

Fig. 5

76 80 78 86 74

82 84

0 218 577

Fig. 6

0 218 577

Fig. 7

0 218 577

Fig. 8

118,122
116,120
128
114
130
132
126
127
124
110
112